# EUROPEAN PATENT APPLICATION

(11) **EP 2 500 209 A2**
(43) Date of publication of application: **19.09.2012**
(21) Application number: 12158483.3
(22) Date of filing: 07.03.2012
(51) Int. Cl.: B60L 11/18

(54) **System and method for use in charging an electrically powered vehicle**

(30) Priority: 15.03.2011 US 201113048280
(71) Applicant: General Electric Company, Schenectady, NY 12345 (US)
(72) Inventor: Boot, John Christopher, Atlanta, GA Georgia 30339 (US)
(74) Representative: Picker, Madeline Margaret

(57) **Abstract**

A system (200) for use in charging an electrically powered vehicle (205) is provided. The system includes a registration device (245) configured to receive an indication that a wireless transmission device (255) is associated with an authorized vehicle (205), receive a first signal from the wireless transmission device (255), wherein the first signal indicates a transmitter identifier, and associate a charging authorization with the indicated transmitter identifier, and a charging device (210) coupled in communication with the registration device (245). The charging device (210) is configured to receive a second signal from the wireless transmission device (255), wherein the second signal indicates the transmitter identifier, and provide electrical energy to the vehicle (205) based on the charging authorization associated with the transmitter identifier.

## Description

### BACKGROUND OF THE INVENTION

The subject matter disclosed herein relates generally to charging electrically powered vehicles and, more specifically, to systems and methods for use in operating a vehicle charging device based on an identifier provided to the charging device by a wireless transmission device.

Electrically powered vehicles, including electric vehicles and plug-in hybrid electric vehicles, include electric motors powered by energy storage devices, such as batteries. An energy storage device is depleted of energy as the motor is operated, requiring the operator of the vehicle to recharge the energy storage device.

At least some known vehicle charging devices are designed for private use and charge the energy storage device when connected to the vehicle, without requiring authentication or authorization of the user. Such private-use charging devices may be unsuitable for use in a publicly accessible location, as such use may impose a utility cost to the party responsible for the charging device (i.e., regardless of who uses the device, the owner of the device may be billed). To enable multiple users to be responsible for their own operating costs, other charging devices may require specialized equipment to identify and/or authenticate the user. However, such systems require additional materials costs and the inconvenience of maintaining possession of the specialized equipment.

### BRIEF DESCRIPTION OF THE INVENTION

This Brief Description is provided to introduce a selection of concepts in a simplified form that are further described below in the Detailed Description. This Brief Description is not intended to identify key features or essential features of the claimed subject matter, nor is it intended to be used as an aid in determining the scope of the claimed subject matter.

In one aspect, a system for use in charging an electrically powered vehicle is provided. The system includes a registration device and a charging device coupled in communication with the registration device. The registration device is configured to receive an indication that a wireless transmission device is associated with an authorized vehicle and to receive a first signal from the wireless transmission device. The first signal indicates a transmitter identifier. The registration device is also configured to associate a charging authorization with the indicated transmitter identifier. The charging device is configured to receive a second signal from the wireless transmission device. The second signal indicates the transmitter identifier. The charging device is also configured to provide electrical energy to the vehicle based on the charging authorization associated with the transmitter identifier.

In another aspect, a method for use in charging an electrically powered vehicle is provided. The method includes receiving at a registration device a first signal from a wireless transmission device and an account identifier. The first signal indicates a transmitter identifier. The transmitter identifier is associated with the account identifier by the registration device. A second signal indicating the transmitter identifier is received from the wireless transmission device at a charging device. The charging device determines whether the account identifier associated with the received transmitter identifier is associated with an authorized account and provides electrical energy to a vehicle when the account identifier is associated with an authorized account.

In yet another aspect, one or more non-transitory computer-readable storage media having computer-executable instructions embodied thereon are provided. When executed by at least one processor, the computer-executable instructions cause the processor to receive a first signal indicating a transmitter identifier from a wireless transmission device, to receive an indication that the first signal is associated with an authorized vehicle, to associate a charging authorization with the transmitter identifier, to receive a second signal indicating the transmitter identifier from the wireless transmission device, and to provide electrical energy to the vehicle based on the charging authorization associated with the transmitter identifier.

### BRIEF DESCRIPTION OF THE DRAWINGS

The embodiments described herein may be better understood by referring to the following description in conjunction with the accompanying drawings.
Fig. 1 is a block diagram of an example computing device;
Fig. 2 is a block diagram of an example vehicle charging system; and
Fig. 3 is a flowchart of an example method for use in charging the electrically powered vehicle shown in Fig. 2.

### DETAILED DESCRIPTION OF EMBODIMENTS OF THE INVENTION

The embodiments described herein facilitate charging an electrically powered vehicle using a one-time registration of a wireless transmission device, such as a key fob or garage door opener, with an authorized account. In example embodiments, after associating the wireless transmission device with the account, a user may connect the vehicle to a charging device. The charging device receives a signal from the wireless transmission device, determines that the user is authorized based on the prior registration, and provides electrical energy to the vehicle. If appropriate, a financial transaction (e.g., a debit) is initiated against a payment account associated with the wireless transmission device and/or the user based on the quantity of electrical energy provided.

In some embodiments, the term "electrically powered vehicle" refers generally to a vehicle that includes one or more electric motors that are used for propulsion. Energy used to propel electrically powered vehicles may come from various energy storage devices, such as, but not limited to, an on-board rechargeable battery, a capacitor, and/or an on-board fuel cell. In one embodiment, the electrically powered vehicle is a hybrid electric vehicle, which may include both an electric motor and a combustion engine. In another embodiment, an electrically powered vehicle is an electric vehicle, which may include only an electric motor for propulsion. Electrically powered vehicles may capture and store energy generated, for example, by braking. Moreover, some electrically powered vehicles are capable of recharging the energy storage device from a power receptacle, such as a power outlet. Accordingly, the term "electrically powered vehicle" as used herein may refer to any vehicle that includes an energy storage device to which electrical energy may be delivered, for example, via a power grid.

An example technical effect of the methods, systems, and apparatus described herein includes at least one of (a) receiving a first signal from a wireless transmission device, wherein the signal indicates a transmitter identifier; (b) receiving an indication that the first signal is associated with an authorized vehicle; (c) associating a charging authorization with the transmitter identifier; (d) receiving a second signal from the wireless transmission device, wherein the second signal indicates the transmitter identifier; (e) providing electrical energy to the vehicle based on the charging authorization associated with the transmitter identifier; and (f) initiating a financial transaction against a payment account associated with the transmitter identifier based at least in part on a quantity of electrical energy provided to the vehicle.

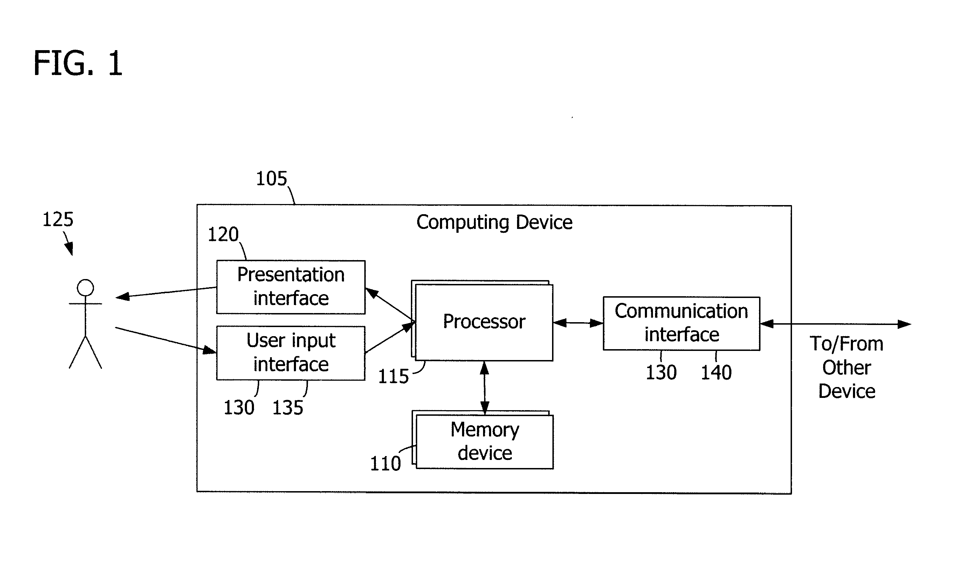

Fig. 1 is a block diagram of an example computing device 105. Computing device 105 includes a memory device 110 and a processor 115 coupled to memory device 110 for executing instructions. In some embodiments, executable instructions are stored in memory device 110. Computing device 105 is configurable to perform one or more operations described herein by programming processor 115. For example, processor 115 may be programmed by encoding an operation as one or more executable instructions and providing the executable instructions in memory device 110. Processor 115 may include one or more processing units (e.g., in a multi-core configuration).

Memory device 110 is one or more devices that enables information such as executable instructions and/or other data to be stored and retrieved. Memory device 110 may include one or more computer readable media, such as, without limitation, dynamic random access memory (DRAM), static random access memory (SRAM), a solid state disk, and/or a hard disk. Memory device 110 may be configured to store, without limitation, computer-executable instructions, transmitter identifiers, account identifiers, payment account information, and/or any other type of data.

In some embodiments, computing device 105 includes a presentation interface 120 that is coupled to processor 115. Presentation interface 120 presents information, such as a user interface, account information, and/or vehicle charging information to a user 125. For example, presentation interface 120 may include a display adapter (not shown in Fig. 1) that may be coupled to a display device, such as a cathode ray tube (CRT), a liquid crystal display (LCD), an organic LED (OLED) display, and/or an "electronic ink" display. In some embodiments, presentation interface 120 includes one or more display devices. In addition to, or in the alternative, presentation interface 120 may include an audio output device (e.g., an audio adapter and/or a speaker) and/or a printer.

In some embodiments, computing device 105 includes an input interface 130, such as a user input interface 135 or a communication interface 140. Input interface 130 may be configured to receive any information suitable for use with the methods described herein.

In the example embodiment, user input interface 135 is coupled to processor 115 and receives input from user 125. User input interface 135 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). A single component, such as a touch screen, may function as both a display device of presentation interface 120 and user input interface 135.

Communication interface 140 is coupled to processor 115 and is configured to be coupled in communication with one or more other devices, such as another computing device 105. For example, communication interface 140 may include, without limitation, a serial communication adapter, a wired network adapter, a wireless network adapter, a mobile telecommunications adapter, a radio frequency (RF) receiver, a radio frequency identification (RFID) reader, a keyless entry receiver, and/or any other device capable of communicating with one or more other devices. Communication interface 140 may transmit data to and/or receive data from one or more remote devices. For example, a communication interface 140 of one computing device 105 may transmit an authentication request to the communication interface 140 of another computing device 105.

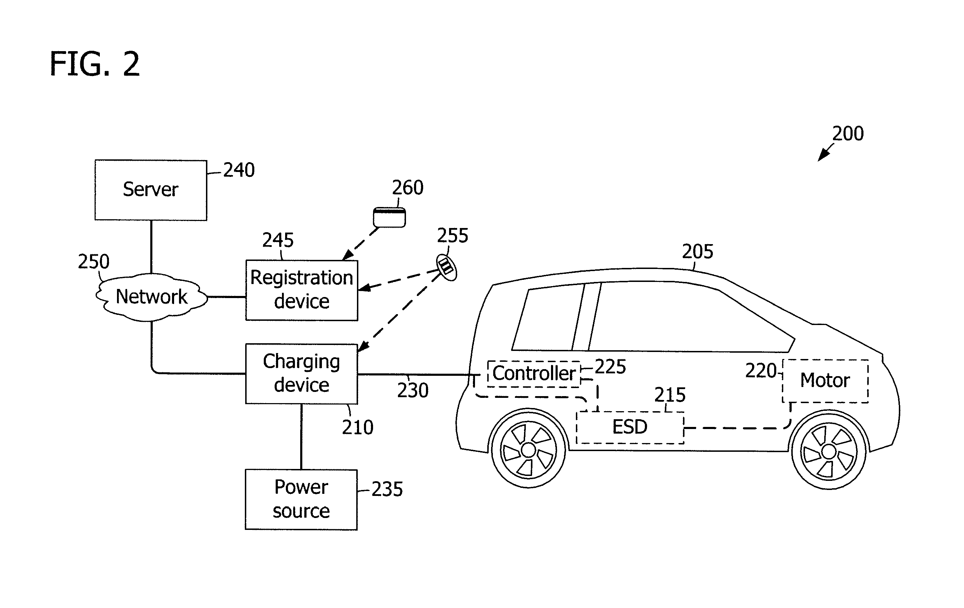

Fig. 2 is a block diagram of an example system 200 for use in charging, or providing electricity to, an electrically powered vehicle 205. In an example embodiment, system 200 includes a charging device 210 coupled to vehicle 205. In the example embodiment, vehicle 205 includes at least one energy storage device 215, such as a battery and/or a capacitor, coupled to a motor 220. Furthermore, vehicle 205 includes a vehicle controller 225 coupled to energy storage device 215.

In the example embodiment, charging device 210 is removably coupled to energy storage device 215 and to vehicle controller 225 via at least one power conduit 230. Alternatively, charging device 210 may be coupled to energy storage device 215 and/or vehicle controller 225 via any other conduit or conduits, and/or charging device 210 may be coupled to vehicle controller 225 via a wireless data link (not shown). In an example embodiment, power conduit 230 includes at least one conductor (not shown) for supplying electricity to energy storage device 215 and/or to any other component within vehicle 205, and at least one conductor (not shown) for transmitting data to, and receiving data from, vehicle controller 225 and/or any other component within vehicle 205. Alternatively, power conduit 230 may include a single conductor that transmits and/or receives power and/or data, or any other number of conductors that enables system 200 to function as described herein. Moreover, in an example embodiment, charging device 210 is coupled to an electric power source 235, such as a power grid of an electric utility company, a generator, a battery, and/or any other device or system capable of providing electricity to charging device 210.

In example embodiments, charging device 210 is coupled in communication with at least one server 240 and a registration device 245 through a network 250. Server 240, in an example embodiment, communicates with charging device 210, for example, by transmitting a signal to charging device 210 to authorize payment and/or delivery of electricity to energy storage device 215, to access customer information, and/or to perform any other function that enables system 200 to function as described herein.

Network 250 may include, without limitation, the Internet, a local area network (LAN), a wide area network (WAN), a wireless LAN (WLAN), a mesh network, a virtual private network (VPN), and/or any other network or data connection that enables system 200 to function as described herein. Charging device 210, controller 225, server 240, and/or registration device 245 may be instances of computing device 105 (shown in Fig. 1). In an example embodiment, each computing device 105 is coupled to network 225 via communication interface 140 (shown in Fig. 1). In addition, or alternative to, registration device 245 may be integrated with charging device 210.

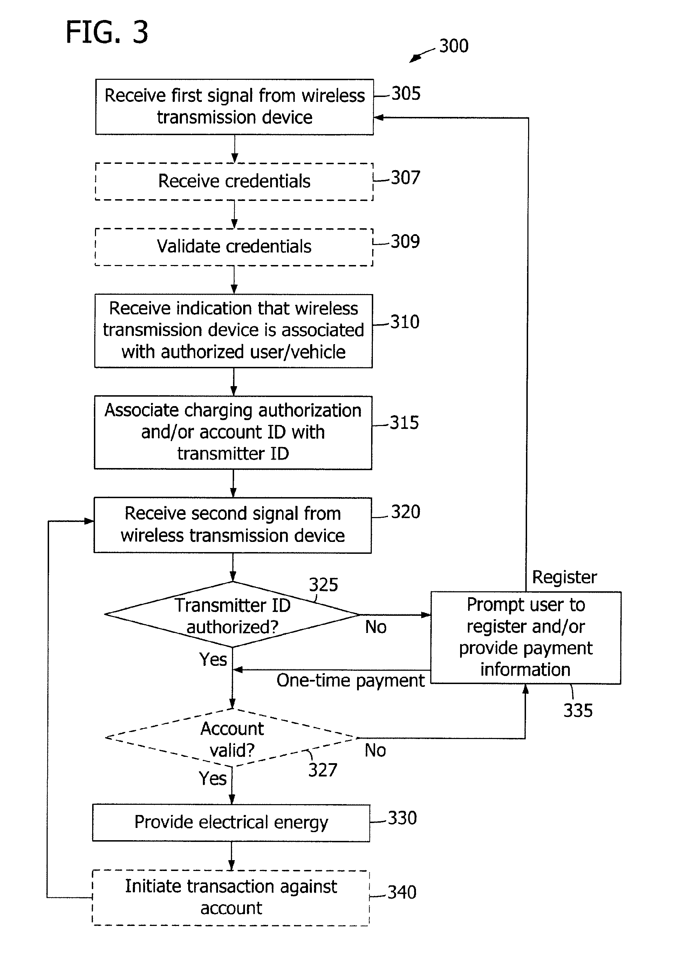

Registration device 245 may receive information from a wireless transmission device 255 and/or a payment device 260. For example, wireless transmission device 255 may include, without limitation, a keyless entry and/or ignition transmitter or "key fob" associated with vehicle 205, a garage door opener, a mobile telephone, and/or any other device capable of wirelessly transmitting a signal that indicates an identifier (ID), as described in more detail below with reference to Fig. 3. Payment device 260 may include, without limitation, a fmancial transaction card (e.g., a credit card or a debit card), a smart card, a radio frequency identification (RFID) device, a mobile telephone, and/or any other device capable of communicating credentials, such as payment account information (e.g., an account number), to registration device 245. For example, registration device 245 may include an input device 130 (shown in Fig. 1) that receives credentials from payment device 260. In one embodiment, input device 130 includes a magnetic stripe reader that reads credentials from a magnetic stripe of payment device 260. In addition, or alternative to, input device 130 may receive credentials entered by a user (e.g., via a keyboard and/or a touch screen).

During operation, in an example embodiment, a user couples energy storage device 215 to charging device 210 with power conduit 230. The user may interact with charging device 210, such as by carrying wireless transmission device 255 within the proximity of charging device 210, by initiating a transmission by wireless transmission device 255, and/or by accessing a user interface (not shown) of charging device 210 to enter information, such as payment information, and/or to initiate power delivery to energy storage device 215.

Charging device 210 is configured to communicate with server 240, for example, to determine whether wireless transmission device 255 is associated with a charging authorization, to authenticate the user, to process the payment information, and/or to initiate a transaction based on the electrical energy provided, as described in more detail below. If charging device 210 receives a signal from server 240 that indicates approval or authorization to deliver power to energy storage device 215, charging device 210 receives power from electric power source 235 and provides the power to energy storage device 215 through power conduit 230.

Charging device 210 communicates with vehicle controller 225 wirelessly, through power conduit 230, and/or through any other conduit, to control and/or to monitor the delivery of power to energy storage device 215. For example, vehicle controller 225 may transmit signals to charging device 210 indicating a charge level of energy storage device 215 and/or a desired amount and/or rate of power to be provided by charging device 210. Moreover, charging device 210 may transmit signals to vehicle controller 225 indicating an amount and/or rate of electricity being delivered to energy storage device 215. Additionally or alternatively, charging device 210 and/or vehicle controller 225 may transmit and/or receive any other signals or messages that enable system 200 to function as described herein. When energy storage device 215 has been charged to a desired level, charging device 210 ceases delivering power to energy storage device 215, and the user disengages power conduit 230 from energy storage device 215.

Fig. 3 is a flowchart of an example method 300 for use in charging vehicle 205 (shown in Fig. 2). Referring to Figs. 2 and 3, in example embodiments, registration device 245 receives 305 from wireless transmission device 255 a first signal that indicates a transmitter identifier (ID). For example, the transmitter ID may be an alphabetic, numeric, or alphanumeric value associated with wireless transmission device 255, vehicle 205, and/or a user. In one embodiment, the wireless signal is transmitted by wireless transmission device 255 when a user presses a button (e.g., an unlock button or a lock button) on wireless transmission device 255. In another embodiment, registration device 245 receives 305 the wireless signal when wireless transmission device 255 is proximate registration device 245. For example, registration device 245 may transmit an excitation signal (e.g., an RFID excitation signal), and wireless transmission device 255 may be a smart key that transmits the wireless signal when in the presence of the excitation signal without any action by the user.

Registration device 245 receives 310 an indication that a wireless transmission device 255 is associated with a user and/or a vehicle that is authorized for charging via charging device 210. For example, registration device 245 may receive an authorization confirmation from a user other than the user of wireless transmission device 255. In one embodiment, an administrative user verifies the identity of the user associated with wireless transmission device 255 and enters an authorization confirmation into registration device 245.

In other embodiments, registration device 245 receives 307 credentials from the user associated with wireless transmission device 255 (e.g., via a keyboard, a touch screen, and/or wireless transmission device 255). The credentials may include, without limitation, an account identifier, a personal identification number (PIN), and/or any other information associated with the user. Registration device 245 validates 309 the credentials, such as by transmitting an authentication request including the credentials to server 240 and receiving an authentication response from server 240. In one embodiment, server 240 stores credentials associated with a collection of authorized users. In response to receiving an authentication request, server 240 compares the received credentials to the stored credentials and transmits a positive authentication response if the two match. The positive authentication response may be considered an indication that wireless transmission device 255 is associated with an authorized user and/or vehicle. If the received credentials do not match the stored credentials, server 240 transmits a negative authentication response, in response to which registration device 245 may terminate method 300.

In addition, or alternative to, the credentials received 307 by registration device 245 may include payment account information (e.g., a payment account ID). In such a scenario, registration device 245 validates 309 the credentials by determining that the payment account ID is associated with a valid payment account. For example, registration device 245 may determine whether the payment account identifier satisfies one or more predetermined rules defining the format of the payment account ID (e.g., the quantity of digits and/or the value of a check digit). Further, registration device 245 may transmit to server 240 a payment authorization request including the payment account ID. Server 240 may communicate with a payment network (e.g., a credit card payment network and/or a debit card payment network) to determine whether the payment account identifier is associated with a valid (e.g., active and in good standing) payment account.

In response to receiving 310 an indication that wireless transmission device 255 is associated with an authorized user and/or vehicle, registration device 245 associates 315 a charging authorization with the transmitter ID received 305 from wireless transmission device 255 and/or with an account ID (e.g., a payment account ID) provided by payment device 260 and/or a user. Registration device 245 may store the association itself and/or transmit the association to server 240, such that a plurality of registration devices 245 and/or charging devices 210, optionally at a plurality of locations, may access the association of the transmitter ID with the charging authorization and/or account ID (e.g., via network 250). Accordingly, system 200 facilitates charging energy storage device 215 of electric vehicle 205 at a charging device 210 that is remote to registration device 245 and/or another charging device 210. For example, server 240 may provide the charging authorization and/or the account ID to such a charging device 210, and charging device 210 may provide electrical energy to vehicle 205, as described below, based on the received charging authorization and/or account ID.

In example embodiments, after the charge authorization is associated 315 with the account ID and/or the transmitter ID, charging device 210 receives 320 from wireless transmission device 255 a second signal that, like the first signal, indicates the transmitter ID. Charging device 210 determines 325 whether a charging authorization is associated with, either directly or indirectly (e.g., via an account ID that is associated with the transmitter ID), the transmitter ID. If so, charging device 210 provides 330 electrical energy to vehicle 205 based on the charging authorization. Otherwise, charging device 210 may prompt 335 the user (e.g., the operator of wireless transmission device 255) to register wireless transmission device 255, as described above, and/or to provide payment information (e.g., one-time payment information), such as a payment account ID.

Method 300 facilitates registering wireless transmission device 255 with registration device 245 one time and repeatedly using the charging authorization provided by such registration. More specifically, the operator of vehicle 205 may obtain electrical energy by presenting wireless transmission device 255 at charging device 210 and/or initiating a transmission from wireless transmission device 255 that is received by charging device 210. Further, as wireless transmission device 255 may be a device associated with a function other than charging vehicle 205 (e.g., a keyless entry transmitter, a keyless ignition transmitter, a smart key, or a garage door opener), use of system 200 does not require the operator to carry a device that is specially configured to interact with charging device 210 or to present payment credentials each time vehicle 205 is charged.

In example embodiments, method 300 is operable to determine whether charging of vehicle 205 is authorized based on the wireless signal received 320 from wireless transmission device 255 and to provide 330 electrical energy to vehicle 205 when such charging is authorized. Some embodiments also facilitate billing an account that is associated with wireless transmission device 255. In some such embodiments, registration device 245 stores a payment account ID in association with the transmitter ID, and charging device 210 initiates 340 a transaction (e.g., a financial transaction) against the account based at least in part on the quantity of energy provided 330 to vehicle 205.

In one embodiment, charging device 210 associates with the payment account a quantity of electrical energy provided to vehicle 205 and/or a debit based on the quantity of such electrical energy. For example, the debit may be expressed as a quantity of energy (e.g., in Joules or kilowatt hours) or as a quantity of currency (e.g., United States dollars or euros) that is based on (e.g., equal to the product of) the quantity of energy and a unit price of energy.

In some embodiments, charging device 210 determines 327 that the payment account identifier is associated with a valid payment account prior to providing electrical energy to vehicle 205. For example, charging device 210 may validate the payment account identifier and/or payment account information associated with the payment account identifier similar to the manner in which registration device 245 validates 309 payment account credentials, as described above.

Further, in determining 327 whether the payment account is valid, charging device 210 may determine whether the payment account includes funds sufficient to pay for an estimated quantity of electrical energy that will be provided to vehicle 205. The estimated quantity may be a predetermined quantity and/or may be based on a current charge state of vehicle 205. For example, controller 225 may indicate a current charge level and a charge capacity of energy storage device 215. Charging device 210 may calculate the quantity of energy required to increase the current charge level to the charge capacity and calculate a quantity of required funds based on this required quantity of energy. In some embodiments, charging device 210 determines whether the account includes sufficient funds by requesting a quantity of available funds from server 240 and/or by transmitting to server 240 a payment authorization request including the quantity of required funds. If server 240 responds with an indication that the account includes sufficient funds, charging device 210 provides 330 electrical energy to vehicle 205. Otherwise, charging device 210 may prompt 335 the user to provide payment information, as described above. In one embodiment, if wireless transmission device 255 is already associated with a charge authorization, but a payment account associated with wireless transmission device 255 is invalid or does not include sufficient funds, charging device 210 may also, upon confirmation by the user, associate the newly entered payment information (e.g., a payment account identifier) with wireless transmission device 255, such that the newly entered payment information may be subsequently used when charging vehicle 205.

While certain operations are described above with respect to particular devices, it is contemplated that any device may perform one or more of the described operations. For example, a computing device 105 such as charging device 210 may perform all of the operations above.

Embodiments provided herein enable associating a wireless transmission device with a vehicle charging authorization using a one-time registration process. The charging authorization is later used to allow the energy storage device of an electrically powered vehicle to be charged based on the presentation of, or a signal transmission by, the wireless transmission device. Such vehicle charging may be performed repeatedly and/or at multiple locations (e.g., remote to the registration device and/or other charging devices) without requiring subsequent registration. Further, because the wireless transmission device may be a device already associated with the vehicle, such as a key fob or a garage door opener, the user may not be required to carry a specialized device for charging the vehicle.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other apparatus and methods.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are example only, and thus are not intended to limit in any way the definition and/or meaning of the term processor.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (200) for use in charging an electrically powered vehicle (205), said system comprising:
a registration device (245) configured to:
receive an indication that a wireless transmission device (255) is associated with an authorized vehicle;
receive a first signal from the wireless transmission device, wherein the first signal indicates a transmitter identifier; and
associate a charging authorization with the indicated transmitter identifier; and
a charging device (210) coupled in communication with said registration device, said charging device configured to:
receive a second signal from the wireless transmission device, wherein the second signal indicates the transmitter identifier; and
provide electrical energy to the vehicle based on the charging authorization associated with the transmitter identifier.

2. A system (200) according to claim 1, wherein said registration device (245) is configured to receive an indication that the wireless transmission device (255) is associated with an authorized vehicle (205) at least in part by receiving an authorization confirmation from a user (125).

3. A system (200) according to claim 1 or claim 2, wherein said registration device (245) is configured to receive an indication that the wireless transmission device (255) is associated with an authorized vehicle (205) at least in part by:
receiving a payment account identifier associated with the transmitter identifier; and
determining that the payment account identifier is associated with a valid payment account.

4. A system (200) according to claim 3, wherein said registration device (245) is further configured to store the payment account identifier in association with the transmitter identifier, and said charging device (210) is further configured to associate with the payment account a quantity of electrical energy provided to the vehicle (205).

5. A system (200) according to claim 3 or claim 4, wherein said charging device (210) is further configured to determine that the payment account identifier is associated with a valid payment account prior to providing electrical energy to the vehicle (205).

6. A system (200) according to any preceding claim, wherein said registration device (245) is configured to receive the first signal by receiving a signal from at least one of a keyless entry transmitter associated with the vehicle (205), and a keyless ignition transmitter associated with the vehicle.

7. A system (200) according to any one of claims 1 to 6, wherein said registration device (245) is configured to receive the first signal by receiving a signal from a garage door opener.

8. One or more non-transitory computer-readable storage media having computer-executable instructions embodied thereon, wherein when executed by at least one processor (115), the computer-executable instructions cause the processor to:
receive a first signal from a wireless transmission device (255), wherein the signal indicates a transmitter identifier;
receive an indication that the first signal is associated with an authorized vehicle (205);
associate a charging authorization with the transmitter identifier;
receive a second signal from the wireless transmission device, wherein the second signal indicates the transmitter identifier; and
provide electrical energy to the vehicle based on the charging authorization associated with the transmitter identifier.

9. One or more computer-readable storage media according to Claim 8, wherein said computer-executable instructions cause the processor (115) to receive an indication that the first signal is associated with an authorized vehicle (205) at least in part by:
receiving credentials from a user (125) associated with the wireless transmission device (255);
transmitting an authentication request including the credentials to a server computing device (105); and
receiving a positive authentication response from the server computing device.

10. One or more computer-readable storage media according to claim 8 or claim 9, wherein said computer-executable instructions cause the processor (115) to receive an indication that the first signal is associated with an authorized vehicle (205) at least in part by:
receiving a payment account identifier from a user (125) associated with the wireless transmission device (255); and
determining that the payment account identifier is associated with a valid payment account.

11. A method for use in charging an electrically powered vehicle, said method comprising:
receiving at a registration device a first signal from a wireless transmission device and an account identifier, wherein the first signal indicates a transmitter identifier;
associating by the registration device the transmitter identifier with the account identifier;
receiving at a charging device a second signal from the wireless transmission device, wherein the second signal indicates the transmitter identifier;
determining by the charging device whether the account identifier associated with the received transmitter identifier is associated with an authorized account; and
providing, by the charging device, electrical energy to a vehicle when the account identifier is associated with an authorized account.

12. A method according to claim 11, wherein the account identifier is associated with a payment account, said method further comprising initiating a financial transaction against the payment account based at least in part on a quantity of electrical energy provided to the vehicle.

13. A method according to claim 12, wherein determining whether the account identifier is associated with an authorized account comprises determining, prior to providing electrical energy to the vehicle, whether the payment account includes funds sufficient to pay for an estimated quantity of electrical energy that will be provided to the vehicle.

14. A method according to any one of claims 11-13, wherein said charging device is a first charging device, said method further comprising:
associating the transmitter identifier with the account identifier at a server computing device; and
providing the account identifier to a second charging device that is remote to the first charging device.

15. A method according to claim 14, further comprising:
receiving at the second charging device a third signal from the wireless transmission device, wherein the third signal includes the transmitter identifier; and
providing electrical energy to a vehicle based at least in part on receiving the account identifier from the server computing device.
